# EUROPÄISCHE PATENTSCHRIFT

(11) **EP 1 965 173 B1**
(45) Veröffentlichungstag und Bekanntmachung des Hinweises auf die Patenterteilung: **24.10.2012**
(21) Anmeldenummer: 07022999.2
(22) Anmeldetag: 28.11.2007
(51) Int. Cl.: G01C 21/36, G08G 1/0969

(54) **Navigationseinrichtung und Verfahren zur grafischen Ausgabe von Navigationsanweisungen**
Navigation device and method for graphically displaying navigation directions
Dispositif de navigation et procédé de production graphique de consignes de navigation

(30) Priorität: 28.02.2007 DE 102007010166; 29.06.2007 DE 102007030345
(43) Veröffentlichungstag der Anmeldung: 03.09.2008
(73) Patentinhaber: Navigon AG, 20251 Hamburg (DE)
(72) Erfinder: Katzer, Jochen, 91605 Bergtshofen (DE)
(74) Vertreter: von den Steinen, Axel

(56) Entgegenhaltungen:
- EP-A1- 1 024 347
- EP-A1- 1 681 537
- EP-A1- 1 681 538
- EP-A2- 1 241 445
- EP-A2- 1 536 394
- JP-A- 10 030 935

## Beschreibung

Die Erfindung betrifft eine Navigationseinrichtung zur Ermittlung und Anzeige einer Navigationsroute von einer Fahrzeugposition zu einem Reiseziel gemäß Patentanspruch 1 sowie ein Verfahren zur grafischen Ausgabe von Navigationsanweisungen gemäß Patentanspruch 11.

Bei der Benutzung von Navigationsgeräten, insbesondere bei der Verwendung von Navigationseinrichtungen während der Fahrt mit dem Kraftfahrzeug, tritt das grundsätzliche Problem auf, dass die Aufmerksamkeit des Fahrers zwischen der realen Situation vor dem Kraftfahrzeug und der Darstellung der Navigationsanweisungen auf dem Bildschirm des Navigationsgeräts geteilt werden muss.

Dieses Problem ist jedoch gerade dann am gravierendsten, wenn das Kraftfahrzeug sich einer vergleichsweise komplizierten Manöversituation nähert, mit welcher der Fahrer noch nicht vertraut ist. Der Fahrer steht in einer solchen Situation vor dem Dilemma, sowohl die Darstellung auf dem Navigationsbildschirm erfassen und verstehen zu müssen als auch gleichzeitig die reale Verkehrssituation und Straßenführung im Auge zu behalten. Zudem muss der Fahrer auch noch die übereinstimmenden Merkmale zwischen der Darstellung auf dem Navigationsbildschirm und der realen Straßensituation erkennen und somit die grafischen Navigationsanweisungen des Navigationsgaräts auf die reale Situation übertragen, um dem richtigen Weg durch die bevorstehende Manöversituation folgen zu können.

Hieraus folgt mit anderen Worten, dass an die Grafikdarstellung von Navigationsgeräten gerade dort besonders hohe Ansprüche zu stellen sind, wo komplexe Kreuzungssituationen intuitiv erfassbar auf dem Bildschirm dargestellt werden sollen.

Aus dem Stand der Technik ist es hierzu gemäß US 5,739,772 bekannt, komplizierte Navigationsmanöver - beispielsweise mit mehreren unmittelbar aufeinander folgenden Abbiegesituationen - als Aneinanderreihung schematischer Pfeildarstellungen auf dem Bildschirm auszugeben. Bei dieser bekannten Lehre werden komplizierte Navigationsmanöver jedoch als eine Abfolge verschiedener Symbole bzw. Pfeile dargestellt, während eine logische bzw. grafische Zusammenfassung des gesamten Navigationsmanövers in eine einzige Darstellung nicht erfolgt.

Insbesondere jedoch werden derartige komplexe Kreuzungssituationen gemäß dieser aus dem Stand der Technik bekannten Lehre lediglich symbolisch dargestellt, so dass für den Fahrer eine intuitive Erkennbarkeit der Übereinstimmung zwischen der Darstellung auf dem Navigationsbildschirm und der realen Straßensituation oft schwierig ist.

Weiter beschreibt die JP 10 030935 A ein Routenführungsgerät für Fahrzeuge, wobei beim Verfolgen einer Route zu einem Zielpunkt räumlich nahe beieinander liegende zu passierende Knotenpunkte gleichzeitig auf einem Bildschirm dargestellt werden. Bei der perspektivischen Darstellung von zwei oder mehreren Knotenpunkten liegt der Mittelpunkt der Knotenpunkte bzw. der Schwerpunkt der Knotenpunkte jeweils in dem auf dem Bildschirm dargestellten Bereich.

Die EP 1 681 538 A1 offenbart ein Navigationssystem und ein Verfahren zur Routenführung, wobei zur Routenführung an einem Knotenpunkt Kreuzungsbilder erstellt werden, die neben der Umgebung der Kreuzung zumindest ein dreidimensionales, perspektivisch dargestelltes Objekt enthalten. Bei der Erstellung der Kreuzungsbilder wird auf mehrere miteinander verknüpfte Graphikdatenbanken zurückgegriffen.

Die EP 1 536 394 A2 bezieht sich auf ein Telematiksystem und ein Verfahren zur Routenführung, wobei zum Verfolgen einer vorberechneten Route an komplexen Kreuzungspunkten schematisierte oder realitätsgetreue Kreuzungsansichten auf der Anzeigeeinrichtung ausgegeben werden. Komplexe Kreuzungen werden dabei mit einer Identifizierungsnummer versehen. Damit kann eine vorberechnete Route auf das Enthalten komplexer Kreuzungssituationen überprüft und die Kreuzungsansichten im Verlauf der Route ausgelesen werden.

Die EP 1 024 347 A1 offenbart ein Navigationsgerät sowie ein Navigationsverfahren, wobei beim Annähern eines Fahrzeugs an eine Kreuzungssituation eine Abbildung der Kreuzungssituation auf einer Anzeigeeinrichtung angezeigt wird. Weiter offenbart ist, dass bereits bei der Erstellung digitaler Kartendaten bestimmte Punkte als schwierig bezüglich dem Folgen einer Routenführung eingestuft werden und für solche Punkte Kreuzungsansichten erzeugt werden.

Die EP 1 681 537 A1 bezieht sich auf ein Navigationssystem mit animierten Kreuzungsansichten, wobei nach der Feststellung, ob ein Fahrzeug sich einer Kreuzung nähert, eine animierte Kreuzungsansicht auf einer Anzeigeeinrichtung abgespielt wird. Dabei wird das Abspielen der animierten Kreuzungsansicht mit der Fahrzeugposition und der Fahrzeuggeschwindigkeit synchronisiert.

Den Verfahren und Vorrichtungen aus dem Stand der Technik ist dabei gemein, dass nur eine unzureichende Identifizierung komplexer Kreuzungssituationen möglich ist. Zudem kann eine intuitive Erkennbarkeit der Kreuzungsansichten durch den Fahrer bzw. den Benutzer nur ungenügend stattfinden, da insbesondere an komplexen Kreuzungen eine realitätsgetreue Darstellung der Kreuzungssituation bzw. der Kreuzungssituationen durch die Vielzahl an dargestellten Objekten und Informationen zu einer Reizüberflutung beim Benutzer führen kann und einer intuitiven Interpretation daher entgegen steht.

Mit diesem Hintergrund ist es Aufgabe der vorliegenden Erfindung, eine Navigationseinrichtung sowie ein Verfahren zur grafischen Ausgabe von Navigationsanweisungen zu schaffen, womit die genannten, im Stand der Technik vorhandenen Nachteile und Beschränkungen überwunden werden sollen.

Insbesondere soll die Erfindung für den Nutzer eine besonders einfache und intuitive Erkennbarkeit der Darstellung komplexer Kreuzungssituationen auf dem Bildschirm eines Navigationsgeräts ermöglichen. Dabei soll ein hoher Grad der Übereinstimmung zwischen der sich dem Nutzer im Vorfeld einer komplexen Kreuzung bietenden Sicht auf die reale Straßensituation und der Darstellung des entsprechenden Navigationsmanövers auf dem Bildschirm erzielt werden. Auf diese Weise sollen Komfort und Sicherheit bei der Benutzung von Navigationsgeräten maßgeblich verbessert werden, insbesondere im Vorfeld und während der Routenführung innerhalb komplexer Kreuzungen.

Diese Aufgabe wird durch eine Navigationseinrichtung gemäß Patentanspruch 1 bzw. durch ein Verfahren nach Patentanspruch 9 gelöst.

Bevorzugte Ausführungsformen sind Gegenstand der Unteransprüche.

Die Navigationseinrichtung gemäß der vorliegenden Erfindung dient in an sich zunächst bekannter Weise zur Ermittlung und Anzeige einer Navigationsroute, insbesondere von einer Fahrzeugposition zu einem Reiseziel, und umfasst eine Prozessoreinrichtung mit Arbeitsspeicher, eine Massenspeichereinrichtung zur Aufnahme einer Datenbank mit geographischen Daten sowie eine Anzeigeeinrichtung.

Erfindungsgemäß zeichnet sich die Navigationseinrichtung jedoch dadurch aus, dass - in Abhängigkeit einer Bewertung der räumlichen Relativposition zumindest zweier aufeinander folgender Kreuzungspunkte der Navigationsroute und der tatsächlichen oder zu erwartenden Fahrzeuggeschwindigkeit, der Straßenklasse und/oder weiterer Charakteristika zur Klassifizierung von komplexen Kreuzungssituationen - die aufeinander folgenden Kreuzungspunkte auf der Anzeigeeinrichtung in Form einer einzigen, gemeinsamen Perspektivdarstellung dargestellt sind.

Dies ist insofern vorteilhaft, als komplexe Kreuzungen, z.B. Autobahnkreuze, häufig mehrere unmittelbar aufeinander folgende Abbiegesituationen umfassen, die für den Fahrer bzw. Nutzer des Navigationssystems schwierig zu überblicken sein können, insbesondere dann, wenn er mit der Örtlichkeit nicht vertraut ist.

Aus dem Stand der Technik bekannte, konventionelle Navigationssysteme stellen derartige komplexe Kreuzungen im Allgemeinen entweder zeitlich aufgelöst hintereinander als Einzelmanöver dar, wodurch sich der für den Nutzer erforderliche Überblick auf der Anzeige der Navigationseinrichtung nicht herstellen lässt. Alternativ werden die komplexen Kreuzungen von herkömmlichen Navigationssystemen lediglich im Rahmen einer konventionellen 2-D-Karten- oder Symboldarstellung angezeigt. Dies überfordert den Benutzer jedoch häufig, da die Symbol - oder Kartendarstellung mit seiner Sichtperspektive nicht übereinstimmt. Dies gilt umso mehr, als das Durchfahrten einer komplexen Kreuzung sehr hohe Konzentration auf die Straßensituation verlangt, weshalb vom Nutzer nur sehr wenig Aufmerksamkeit auf die Entschlüsselung einer abstrakten Darstellung auf dem Bildschirm des Navigationsgeräts gelegt werden kann.

Erfindungsgemäß wird also mit anderen Worten anhand der räumlichen Relativposition - beispielsweise anhand des Abstands - unmittelbar aufeinander folgender Kreuzungspunkte bzw. Abbiegesituationen sowie anhand weiterer Parameter, wie fatsächlicher oder zu erwartender Fahrzeuggeschwindigkeit oder Straßenklasse, eine Bewertung vorgenommen, ob es erforderlich ist, mehrere sequenzielle Abbiegesituationen zusammenzuziehen und in einer einzigen gemeinsamen Darstellung auf dem Bildschirm des Navigationsgeräts anzuzeigen.

Ist dies der Fall, so wird eine entsprechende Perspektivdarstellung erzeugt bzw. aus dem Massenspeicher des Navigationsgeräts aufgerufen, die die zusammenzufassenden Abbiegesituationen in einer Übersichtsdarstellung enthält. Dabei stimmt der Blickwinkel der Perspektivdarstellung mit der Sichtperspektive des Nutzers, also insbesondere mit der Perspektive des Fahrers eines Kraftfahrzeugs, überein. Der Nutzer kann daher mit einem Blick auf den Bildschirm des Navigationsgeräts die gesamte komplexe Kreuzung bzw. die gesamte Sequenz der aufeinander folgenden Abbiegesituationen intuitiv erfassen und somit der korrekten Route auch bei schwierigen Manövern in unbekannter Umgebung leicht und sicher folgen.

Zudem ist erfindungsgemäß vorgesehen, dass die Perspektivdarstellung Schilder (4) als grafische Elemente umfasst, wobei sämtliche in der realen Straßensituation vorhandenen Schilder (4) dargestellt werden, und wobei dasjenige Schild (4), das auf die zu folgende Fahrspur bzw. Abzweigung hinweist, gegenüber den anderen vorhandenen, jedoch vorliegend weniger relevanten Schildern (4) hervorgehoben dargestellt wird. Auf diese Weise lässt sich eine noch bessere Übereinstimmung der auf dem Bildschirm des Navigationsgeräts dargestellten Gesamtsituation mit der realen Straßensituation erreichen, ohne dass dadurch die Eindeutigkeit der Perspektivdarstellung in Bezug auf die zu folgende Route leidet.

Erfindungsgemäß ist die Navigationseinrichtung selbst zur Ermittlung und Bewertung der räumlichen Relativposition zumindest zweier Kreuzungspunkte und zur Erstellung der entsprechenden Perspektivdarstellung der komplexen Kreuzungssituation eingerichtet.

Eine weitere Ausführungsform der Erfindung sieht vor, dass die Perspektivdarstellung anhand einer fotografischen oder videografischen Aufnahme der realen Abbiegesituationen erstellt ist.

Im Gegensatz zu komplett virtuell erzeugten Perspektivdarstellungen lässt sich auf diese Weise gewährleisten, dass die von der Navigationseinrichtung ausgegebenen Perspektivdarstellungen sehr präzise mit der realen Situation übereinstimmen. Zudem lässt sich auf diese Weise gegenüber dem komplett virtuellen Rendering der Perspektivdarstellungen die ggf. erforderliche Rechenleistung reduzieren.

Gemäß einer alternativen Ausführungsform der Erfindung ist vorgesehen, dass die Perspektivdarstellung anhand einer dreidimensional und/oder fotorealistisch gerenderten Aufnahme der realen Abbiegesituation erstellt ist. Diese Alternative hat den Vorteil, dass auch ohne eigens vorliegende oder zu erstellende Foto- oder Videoaufnahmen realitätsnahe bzw. hyperrealistische dreidimensionale Darstellungen oder Perspektivdarstellungen erzeugt werden können.

Eine weitere Ausführungsform der Erfindung sieht vor, dass die Perspektivdarstellung grafische Kurven bzw. im Wesentlichen durchgehende Pfeile zur Verdeutlichung der vorgegebenen Route umfasst. Auf diese Weise lässt sich die vom Nutzer zu verfolgende Route komplett perspektivisch sowie durchgängig visualisieren, auch dann, wenn die Route mehrere aufeinander folgende Abbiegesituationen umfasst. Dies ist ein wesentlicher Vorteil gegenüber dem Stand der Technik, bei dem bisher nur eine separate Pfeildarstellung einzelner sukzessiver Manöver erfolgt, nicht jedoch eine durchgehende Visualisierung der zu folgenden Fahrspur über mehrere sukzessive Manöver.

Gemäß einer weiteren Ausführungsform der Erfindung ist vorgesehen, dass die Perspektivdarstellung selbst statisch ist und auf dem Bildschirm der Navigationseinrichtung mit einem beweglichen grafischen Element überlagert ist, wobei das grafische Element den aktuellen Standort des Nutzers bzw. der Navigationseinrichtung symbolisiert.

Dies ist vorteilhaft, da der Nutzer somit auch während der (vorübergehend) statischen Anzeigedauer der Perspektivdarstellung auf dem Bildschirm des Navigationsgeräts seine eigene Position und deren Veränderung auf dem Navigationsbildschirm leicht identifizieren und nachverfolgen kann. Bei diesem grafischen Element kann es sich insbesondere um eine Positionsdarstellung des Fahrzeugs, aber auch um einen Fortschrittsbalken, der die Annäherung an das Manöver charakterisiert, handeln.

Gemäß einer weiteren bevorzugten Ausführungsform der Erfindung ist vorgesehen, dass die Perspektivdarstellung auf dem Bildschirm der Navigationseinrichtung weitere grafische Elemente, insbesondere Brücken, Unterführungen, Points of Interest, Icons, Gebäudesilhouetten, Landschaftsmerkmale, oder eine Reliefdarstellung des Geländemodells entsprechend der realen Umgebung der Abbiegesituation bzw. der komplexen Kreuzung umfasst.

Auf diese Weise ergibt sich der Vorteil einer besonders realistischen Darstellung insbesondere komplexer Abbiegesituationen, da der Nutzer sowohl in der realen Straßensituation als auch auf dem Bildschirm des Navigationsgeräts die entsprechend hervorstechenden Umgebungsmerkmale vorfindet und diese somit zur besseren Orientierung heranziehen kann.

Vorzugsweise sind dabei die weiteren grafischen Elemente unabhängig von der Perspektivdarstellung erzeugt und modular gespeichert. Hierdurch wird zunächst einmal Speicherplatz gespart, und es ergibt sich der Vorteil einer weitgehenden Vereinheitlichung der weiteren grafischen Elemente, die so jeweils nur in einer oder wenigen Standardkonfigurationen erzeugt bzw. gespeichert werden müssen. Je nach Bedarf können die separat gespeicherten weiteren grafischen Elemente sodann abgerufen und mit der Perspektivdarstellung modular bzw. in Form eines grafischen Baukastensystems überlagert werden.

In Abhängigkeit der Annäherung an die jeweilige Abbiegesituation kann zudem vorgesehen sein, dass die weiteren grafischen Elemente, z.B. Schilder oder Brücken, mit zunehmender Größe dargestellt werden, was dank der als statischer Hintergrund dargestellten Perspektivdarstellung nur geringe Rechenleistung erfordert, trotzdem jedoch die Annäherung an die bevorstehende komplexe Kreuzungssituation für den Nutzer visualisiert.

Vorzugsweise weisen die weiteren grafischen Elemente überdies jeweils einen transparenten Bildhintergrund auf. Auf diese Weise kann eine einfache und nahtlose Überlagerung der weiteren grafischen Elemente und der Perspektivdarstellung bzw. der Straßensilhouette - unabhängig von Form, Größe oder grafischer Komplexität der weiteren grafischen Elemente - erfolgen.

Die Erfindung betrifft ferner ein Verfahren zur grafischen Ausgabe von Navigationsanweisungen durch eine zur Ermittlung und Anzeige einer Navigationsroute von einer Fahrzeugposition zu einem Reiseziel eingerichtete Navigationseinrichtung. Dabei umfasst die Navigationseinrichtung zunächst einmal eine Prozessoreinrichtung mit Arbeitsspeicher, eine Massenspeichereinrichtung zur Aufnahme einer geographischen Datenbank, eine Anzeigeeinrichtung sowie ferner eine in den Arbeitsspeicher bzw. in die Prozessoreinrichtung aufnehmbare Navigationssoftware.

Das erfindungsgemäße Verfahren umfasst dabei die nachfolgend dargestellten Verfahrensschritte.

Zunächst einmal erfolgt in einem ersten Verfahrenschritt a) durch die Navigationseinrichtung während der Navigationsfahrt eine Bewertung und Überprüfung auf Vorliegen einer komplexen Kreuzungssituation anhand einer Bewertung des Abstands zwischen mehreren entlang einer Navigationsroute aufeinander folgenden Krenzungspunkten sowie anhand der zu erwartenden Fahrzeuggeschwindigkeit, der Straßenklasse oder anhand anderer in der Straßenkarte vorhandener Kreuzungsattribute erfolgen.

Bei positivem Ergebnis der Überprüfung und Bewertung aus Verfahrenschritt a) wird in einem weiteren Verfahrenschritt b) sodann auf Basis von Fotos, Videos und/oder Renderings eine einzige gemeinsame Perspektivdarstellung der die aufeinander folgenden Kreuzungspunkte umfassenden Straßensituation erstellt.

In einem weiteren Verfahrenschritt c) erfolgt die Ausgabe der Perspektivdarstellung auf der Anzeigeeinrichtung des Navigationsgeräts

Betreffend die Darstellung der Schilder werden erfindungsgemäß sämtliche in der realen Straßensituation vorhandenen Schilder dargestellt, wobei dasjenige Hinweisschild, das auf die zu folgende Fahrspur bzw. Abzweigung hinweist, gegenüber den anderen vorhandenen, jedoch vorliegend weniger relevanten Schildern hervorgehoben dargestellt ist. Auf diese Weise lässt sich eine noch bessere Übereinstimmung der auf dem Bildschirm des Navigationsgeräts dargestellten Gesamtsituation mit der realen Straßensituation erreichen, ohne dass dadurch die Eindeutigkeit der Perspektivdarstellung in Bezug auf die zu folgende Route leidet.

Erfindungsgemäß umfasst die komplexe Kreuzungssituation zumindest zwei aufeinander folgende Abbiegesituationen bzw. Kreuzungspunkte. Dies bringt den Vorteil mit sich, dass gerade die für den Nutzer besonders diffizilen Situationen mit mehreren unmittelbar aufeinander folgenden Spurwechseln oder Abbiegevorgängen in einer einheitlichen und anschaulichen Übersichtsdarstellung gezeigt werden können, so dass der Nutzer die reale Situation und die Bildschirmdarstellung miteinander abgleichen und so weitgehend intuitiv seinen Weg durch die komplexe Kreuzung finden kann.

Gemäß einer weiteren bevorzugten Ausführungsform des erfindungsgemäßcn Verfahrens werden im Rahmen der fotografischen, videografischen oder gerenderten Abbildungserzeugnisse zusätzlich relevante Charakteristika der Abbiegesituation bzw. der komplexen Kreuzung erfasst. Hierunter fallen insbesondere die jeweilige Anzahl der Fahrspuren, etwaiger Links/Rechts-Verkehr, Schilder und deren Beschriftungen, geometrische Eigenschaften der Fahrspuren, Umgebuugsmerkmale und/oder Überführungs- bzw. Unterführungssituationen wie insbesondere Brücken.

Auf diese Weise kann die dreidimensionale bzw. Perspektivdarstellung der komplexen Kreuzung besonders realitätsgetreu ausgestaltet werden, indem bei der Erzeugung der Perspektivdarstellung zusätzliche relevante Charakteristika in die Perspektivdarstellung eingearbeitet werden. Hierdurch wird die schnelle und intuitive Wiedererkennbarkeit und der Abgleich der Perspektivdarstellung mit der realen Straßensituation durch den Nutzer gewährleistet, und die Gefahr der Ablenkung durch komplizierte Darstellungen auf dem Navigationsbildschirm wird weiter verringert.

Eine Ausführungsform des erfindungsgemäßen Verfahrens sieht vor, dass die Erzeugung der Perspektivdarstellung zur Laufzeit der Navigation bzw. des Grafik-Rendering erfolgt. Dies bedeutet mit anderen Worten, dass die Perspektivdarstellung durch das Navigationsgerät selbst anhand von in der Datenbank des Navigationsgeräts gespeicherten Daten oder Grafikbausteinen erzeugt wird.

Erfindungsgemäß ist vorgesehen, dass die Perspektivdarstellung bei ihrer Erzeugung modular aus grafischen Einzelelementen zusammengesetzt wird. Dabei umfassen die grafischen Einzelelemente insbesondere Straßengeometrie, Brücken, Unterführungen, Schilder, Points of Interest, Icons, Gebäudesilhouetten und/oder Landschaftsmerkmale.

Auf diese Weise wird zunächst einmal Speicherplatz sowie Rechenleistung eingespart, und die weiteren grafischen Elemente lassen sich weitgehend vereinheitlichen. Zudem müssen die weiteren grafischen Elemente so jeweils nur noch in wenigen Standardkonfigurationen erzeugt bzw. gespeichert werden und können sodann je nach Bedarf miteinander im Sinne eines grafischen Modulbaukastens kombiniert werden, um so die Perspektivdarstellung zu erzeugen.

Dabei kann entweder die gesamte Perspektivdarstellung modular aus Einzelbausteinen erzeugt werden, oder aber es können bedarfsweise nur bestimmte Elemente, wie beispielsweise Schilder und Routenführungspfeile, über die ansonsten inklusive Hintergrund, Straßengeometrie und Brücken/Unterführungen fertig abgespeicherten Perspektivdarstellungen gelegt werden.

Denkbar ist auch, dass bestimmte grafische Elemente, insbesondere Schilder oder Brücken, bei zunehmender Annäherung an die jeweilige Mantiversituation auch mit zunehmender Größe dargestellt werden, ohne dass jedoch die Perspektivdarstellung bzw. die Darstellung der Straßengeometrie selbst verändert werden muss. Auf diese Weise lässt sich die Annäherung an die Manöversituation einfach visualisieren, ohne dass der gesamte Bildschirminhalt ständig neu zu berechnen ist.

Vorzugsweise weisen dabei die grafischen Einzelelemente einen transparenten Bildhintergrund auf, wodurch sich eine Möglichkeit zur einfachen und nahtlosen Überlagerung der grafischen Einzelelemente unabhängig von deren Form, Größe und grafischen Komplexität zu der kompletten Perspektivdarstellung ergibt.

Gemäß einer weiteren Ausführungsform des erfindungsgemäßen Verfahrens ist vorgesehen, dass die grafischen Einzelelemente mit austauschbaren Anzeigeformaten versehen sind. Derartige Anzeigeformate - auch als sog. "Skins" bezeichnet -, die insbesondere die jeweils verwendeten Farben, Füllmuster, Texturen, Strichbreiten, Schriftarten/-Farben und - Größen betreffen, können dank dieser Ausführungsform übergreifend angepasst bzw. verändert werden. Auf diese Weise entspricht jedes einzelne grafische Element und damit auch die fertige Perspektivdarstellung dem jeweils gewählten Anzeigeformat, ohne dass hierzu die grafischen Elemente aufwändig einzeln gerendert werden müssten. Hierdurch ergibt sich eine einfache Anpassungsmöglichkeit des Aussehens der Gesamtgrafik an die jeweils spezifischen Randbedingungen, wie beispielsweise Tag-/Nachtdarstellung, Kundenpräferenzen und dergleichen.

Nach einer weiteren Ausführungsform des erfindungsgemäßen Verfahrens ist vorgesehen, dass zumindest ein Schild als grafisches Einzelelement während der Routenführung bzw. zur Laufzeit des Renderings der Perspektivdarstellung aus einer gespeicherten Textdatei erzeugt wird.

Diese Ausführungsform der Erfindung besitzt insbesondere den Vorteil eines extrem geringen Speicherplatzbedarfs bei gleichzeitig realitätsgetreuer grafischer Darstellung von Straßenschildern mit im Wesentlichen beliebigem Textinhalt. Die Ausführungsform bedeutet mit anderen Worten, dass die anzuzeigenden Schilder nicht in Form von Grafikdateien abgespeichert sind, sondern dass lediglich Merkmale der Schilder, wie insbesondere der Schildertext, ggf. aber auch weitere Merkmale, wie insbesondere die Größe der Schilder, auf den Schildern angezeigte Symbole, Farben usw., in Form von Beschreibungsdateien bzw. Textdateien abgespeichert sind. Die eigentliche Schildergrafik wird sodann bedarfsweise aus den gespeicherten Attributen erzeugt.

Wahlweise kann auch ein bestimmter Umfang beispielsweise besonders häufig vorkommender Schilder als fertig vorgenerierte Grafik abgespeichert sein, wobei dann zusätzlich anzuzeigende Schilder beim Fehlen einer vorgenerierten Grafik aus den entsprechenden Beschreibungsdateien erzeugt und gerendert werden. Es kann also sowohl die grafische als auch die textbasierte Erzeugung bzw. Darstellung von Schildern parallel vorgesehen sein.

Gemäß einer weiteren bevorzugten Ausführungsform des erfindungsgemäßen Verfahrens ist vorgesehen, dass die Perspektivdarstellung in Übereinstimmung mit der gewählten bzw. zu folgenden Navigationsroute mit zumindest einer durchgehenden grafischen Kurve bzw. zumindest einem durchgehenden Pfeil überlagert wird.

Auf diese Weise lässt sich die vom Nutzer zu verfolgende Route durchgängig perspektivisch visualisieren, auch dann, wenn sie mehrere aufeinander folgende Abbiegesituationen umfasst. Die Perspektivdarstellung wird dabei mit demjenigen Pfeil überlagert, welcher der gewählten Route im Navigationssystem entspricht. Dabei können für ein und dieselbe Kombination aus Eingang und Ausgang der komplexen Kreuzung auch mehrere Kurven bzw. Pfeile gespeichert sein bzw. angezeigt werden, sofern mehrere zulässige Wege vom Eingang zum Ausgang der komplexen Kreuzung bestehen.

Die Auswahl zwischen mehreren vorhandenen grafischen Fahrtkurven bzw. mehreren zu folgenden Pfeilen kann dabei beispielsweise anhand der tatsächlich gewählten Fahrspur zum Zeitpunkt des Eintritts in die komplexe Kreuzung erfolgen. Wahlweise können aber auch alle vorhandenen und mit der zu folgenden Route übereinstimmenden Routenführungspfeile gleichzeitig und spurgenau angezeigt werden. Dies bedeutet, dass für jede Fahrspur, die mit der zu folgenden Route übereinstimmt, ein eigener Pfeil dargestellt wird, während hingegen die Routenfüh-rungspfeile derjenigen Fahrspuren, die nicht zum aktuellen Manöver passen, ausgeblendet werden.

Auf diese Weise erkennt der Nutzer sofort, ob mehrere Fahrspuren zur Verfügung stehen, aus denen er wählen kann, ohne das aktuelle Manöver bzw. die Route zu verlassen. Zudem erhält der Nutzer sofort einen unmittelbaren Überblick darüber, ob er sich auf einer der ggf. mehreren zulässigen Spuren befindet, was mit einem entsprechenden Sicherheitsgewinn für den Nutzer verbunden ist.

Eine weitere bevorzugte Ausführungsform der Erfindung sieht vor, dass die Perspektivdarstellung im Wesentlichen statisch ist, jedoch mit einem beweglichen grafischen Element überlagert wird. Dabei symbolisiert das bewegliche grafische Element den aktuellen Standort des Nutzers bzw. der Navigationseinrichtung. Auf diese Weise kann der Nutzer nicht nur während der normalen Navigation, sondern auch während der vorübergehenden Anzeigedauer einer im Wesentlichen statischen Perspektivdarstellung seine eigene Position und deren Veränderung auf dem Navigationsbildschirm besser erkennen.

Eine weitere, besonders bevorzugte Ausführungsform der Erfindung sieht vor, dass die relevanten Charakteristika der komplexen Kreuzung im Dateinamen der Perspektivdarstellung codiert sind. Dies hat den entscheidenden Vorteil, dass der Zugriff auf die jeweils - in Bezug auf eine bestimmte komplexe Kreuzung - benötigte Perspektivdarstellung in jedem Fall eindeutig erfolgen kann, unabhängig davon, ob die Perspektivdarstellung fertig generiert im Speicher des Navigationsgeräts vorliegt oder aber während der Laufzeit der Navigation aus grafischen Einzelelementen zusammengestellt oder gerendert wird.

Mit anderen Worten kann eine zu einer komplexen Kreuzung gehörige Perspektivdarstellung somit lediglich durch Bezugnahme auf den entsprechenden Dateinamen entweder direkt aufgerufen werden (wenn die Grafik bereits fertig im Massenspeicher des Navigationsgeräts vorliegt), oder aber es kann - ebenfalls lediglich durch Aufruf des Dateinamens - die Erstellung der entsprechenden Perspektivdarstellung in Gang gesetzt werden (wenn noch keine entsprechende fertige Grafik vorliegt).

Im Folgenden wird die Erfindung anhand lediglich Ausführungsbeispiele darstellender Zeichnungen näher erläutert.

Es zeigen
- **Fig. 1**: in schematischer Darstellung ein Beispiel für eine durch die erfindungsgemäße Navigationseinrichtung bzw. das erfindungsgemäße Verfahren erzeugte Perspektivdarstellung einer komplexen Kreuzungssituation;
- **Fig. 2**: in einer **Fig. 1** entsprechenden Darstellung ein weiteres Beispiel für eine Perspektivdarstellung einer komplexen Kreuzungssituation;
- **Fig. 3**: in einer **Fig. 1** und **2** entsprechenden Darstellung ein weiteres Beispiel für eine Perspektivdarstellung einer komplexen Kreuzungssituation;
- **Fig. 4**: in einer **Fig. 1** bis **3** entsprechenden Darstellung ein weiteres Beispiel für eine Perspektivdarstellung einer komplexen Kreuzungssituation auf einem kleineren Navigationsbildschirm;
- **Fig. 5**: in einer schematischen Darstellung ein HintergrundGrafikmodul als Grafikbaustein zur Erstellung einer Perspektivdarstellung einer komplexen Kreuzungssituation;
- **Fig. 6**: in einer **Fig. 5** entsprechenden Darstellung ein Straßengeometrie-Grafikmodul zur Erstellung einer Perspektivdarstellung einer komplexen Kreuzungssituation;
- **Fig. 7**: in einer **Fig. 5** und **6** entsprechenden Darstellung ein Brücken-Grafikmodul zur Erstellung einer Perspektivdarstellung einer komplexen Kreuzungssituation;
- **Fig. 8**: in einer **Fig. 5** bis **7** entsprechenden Darstellung ein Schilder-Grafikmodul zur Erstellung einer Perspektivdarstellung einer komplexen Kreuzungssituation;
- **Fig. 9**: in einer **Fig. 5** bis **8** entsprechenden Darstellung ein Richtungspfeil-Grafikmodul zur Erstellung einer Perspektivdarstellung einer komplexen Kreuzungssituation;
- **Fig. 10**: in einer **Fig. 5** bis **9** entsprechenden Darstellung die aus den Grafikmodulen gemäß **Fig. 4** bis **8** erstellte Perspektivdarstellung;
- **Fig. 11**: in einer **Fig. 5** bis **10** entsprechenden Darstellung nochmals die Manöversituation gemäß **Fig. 2****;**
- **Fig. 12**: in einer schematischen Draufsicht den zu der Manöversituation gemäß **Fig. 11** gehörigen Verzweigungsbaum einer Straßenkarte; und
- **Fig. 13**: eine Eigenschaftstabelle der zu der Manöversituation gemäß **Fig. 11** und **12** gehörigen Perspektivdarstellung zur Definition des Dateinamens für die Perspektivdarstellung.

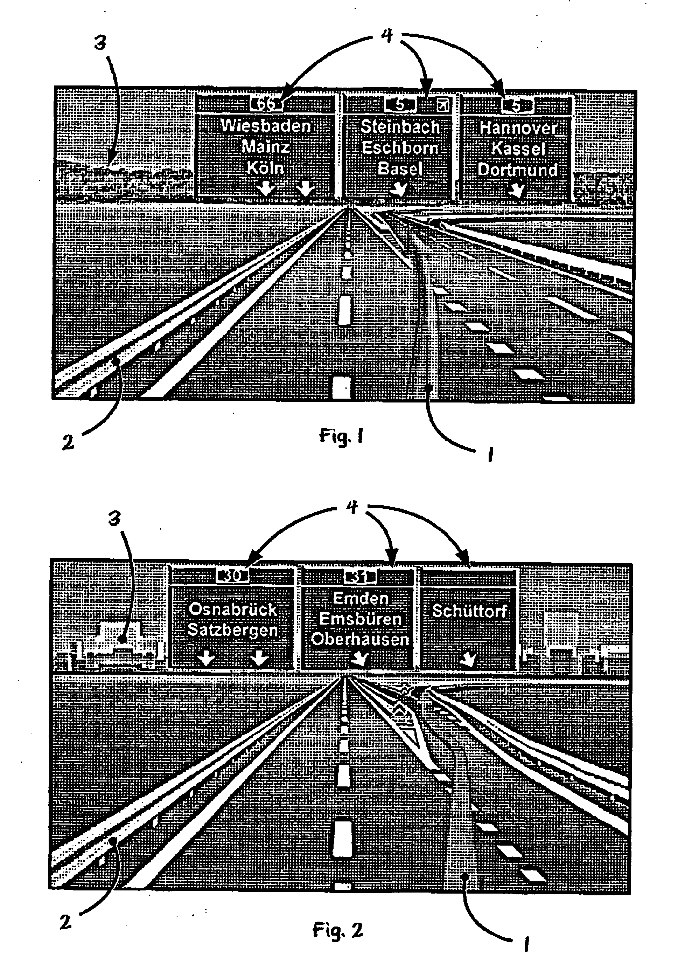

**Fig. 1** zeigt in schematischer Darstellung ein Beispiel für eine durch die erfindungsgemäße Navigationseinrichtung bzw. das erfindungsgemäße Verfahren dargestellte bzw. erzeugte Perspektivdarstellung einer komplexen Kreuzungssituation.

Man erkennt, dass die dargestellte Manöversituation zwei unmittelbar aufeinander folgende Navigationsmanöver umfasst. Das erste Manöver besteht in dem Spurwechsel von der A66 auf die A5, wobei dieser erste Spurwechsel zunächst einmal beide anschließenden Fahrtrichtungen der A5 umfasst. Sofort im Anschluss daran liegt eine weitere Abbiegesituation vor, nämlich die Entscheidung, welche Fahrtrichtung der A5 befahren werden soll. Bei der vorliegenden Navigationsroute sei die A5 in Fahrtrichtung Steinbach, Eschborn, Basel zu befahren. Die komplexe Kreuzung gemäß **Fig. 1** erfordert somit eine erste Navigationsanweisung bezüglich der Ausfahrt von der A66 auf die zunächst noch gemeinsame Auffahrt zu den beiden Fahrtrichtungen der A5, und unmittelbar anschließend eine weitere Navigationsanweisung, nämlich auf einer der beiden geradeaus weiterführenden Fahrspuren Richtung A5 Steinbach, Eschborn, Basel zu bleiben.

Die Perspektivdarstellung gemäß **Fig. 1** fasst beide Navigationsanweisungen grafisch zu einer einzigen Perspektivdarstellung zusammen und überlagert die Darstellung der gesamten komplexen Kreuzung mit einem ebenfalls beide Navigationsmanöver umfassenden Richtungspfeil 1. Auf diese Weise kann der Fahrer mit einem Blick die gesamte bevorstehende Situation erfassen und sofort intuitiv die richtige Fahrspur durch die gesamte komplexe Kreuzung wählen.

Die intuitive Erkennbarkeit der Situation wird dadurch unterstützt, dass die Perspektivdarstellung gemäß **Fig. 1** zunächst einmal mit der tatsächlichen Blickhöhe des Fahrers ungefähr übereinstimmt, wodurch sich sowohl auf dem Navigationsbildschirm als auch bei der realen Straßensituation die gleichen perspektivischen Winkel und Fluchtpunkte ergeben.

Ferner umfasst die Perspektivdarstellung gemäß **Fig. 1** eine Reihe von Umgebungsmerkmalen, die sich auch bei der zugehörigen realen Straßensituation wiederfinden. Hierzu gehören insbesondere die erhaben angedeuteten Leitplanken 2, der die umgebende Landschaft symbolisierende Hintergrund bzw. Horizont 3 sowie die mit der tatsächlichen Beschilderung der Ausfahrt übereinstimmenden grafisch dargestellten Autobahnschilder 4.

Diese Merkmale der Perspektivdarstellung zusammengenommen führen zu einer in hohem Maße gegebenen Übereinstimmung zwischen der realen Straßensituation und der Darstellung auf dem Bildschirm des Navigationsgeräts, wobei der einzige wesentliche Unterschied zwischen der realen Situation und der Bildschirmdarstellung in der auf dem Bildschirm zusätzlich vorhandenen Pfeildarstellung 1 zur Visualisierung der zu folgenden Fahrspur besteht.

**Fig. 2** zeigt eine ähnliche Kreuzungssituation wie **Fig. 1****,** mit dem Unterschied, dass bei der Fig. 2 zugrundeliegenden Navigationsroute nach der ersten Ausfahrt von der Autobahn der unmittelbar darauf folgenden weiteren Ausfahrt zu folgen ist. Auch hier wird die durch die komplexe Kreuzung hindurch zu folgende Fahrspur für den Fahrer wieder durch das Zusammenwirken der das gesamte Manöver umfassenden Perspektivdarstellung mit dem überlagerten Richtungspfeil 1 auf einen Blick erkennbar. Im Unterschied zu **Fig. 1** wurde bei der Darstellung gemäß **Fig. 2** städtische Umgebung symbolisierender Hintergrund 3 verwendet, welcher mit der entsprechenden realen Situation der Autobahnausfahrt gemäß **Fig. 2** übereinstimmt.

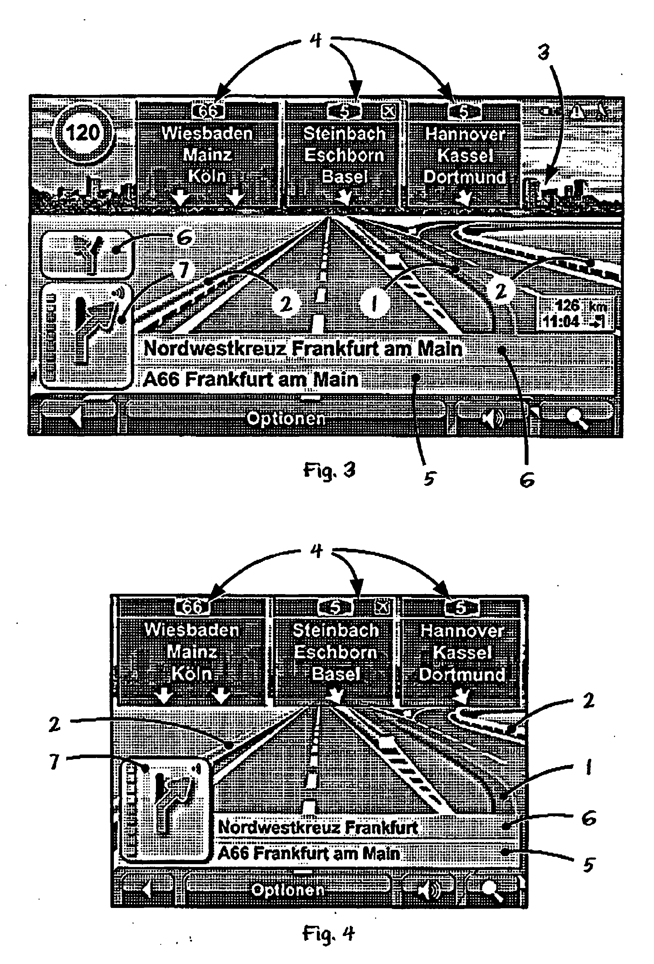

Die in **Fig. 3** dargestellte komplexe Kreuzungssituation entspricht im Wesentlichen wieder der Kreuzungssituation gemäß **Fig. 1****.** Im Unterschied zu den **Fig. 1** und **2** sind bei der Darstellung gemäß **Fig. 3** noch einige Zusatzinformationen eingeblendet, die insbesondere die aktuell befahrene Strecke 5 sowie eine Bezeichnung der gerade erreichten Abbiegesituation 6 umfassen, ferner ist in die Bildschirmdarstellung gemäß **Fig. 3** eine zusätzliche schematische Darstellung der beiden bevorstehenden, sukzessiven Abbiegevorgänge 7 (mit Annäherungsbalken) sowie 8 aufgenommen. Besonders deutlich erkennbar wird in **Fig. 3** auch die Form der Anzeige der Schildertafeln. Die dargestellten Verkehrsschilder 4 sind einerseits in hohem Maße realitätsgetreu gerendert, andererseits jedoch halbtransparent ausgeführt, so dass der Nutzer sowohl die Texte auf den Verkehrsschildern 4 lesen als auch gleichzeitig noch den Bildhintergrund wahrnehmen kann.

Die in **Fig. 4** gezeigte komplexe Kreuzungssituation entspricht weitestgehend der in **Fig. 3** gezeigten Perspektivdarstellung. Der Unterschied zwischen der Perspektivdarstellung gemäß **Fig. 4** und der Perspektivdarstellung gemäß **Fig. 3** besteht im Wesentlichen lediglich darin, dass die Perspektivdarstellung gemäß **Fig. 4** für einen kleineren Navigationsbildschirm gerendert wurde. Daher sind bei der Perspektivdarstellung gemäß **Fig. 4** einige Grafikelemente kleiner dargestellt oder komplett weggelassen, um dem Nutzer trotzdem noch die Übersicht über die durch die komplexe Kreuzung zu folgende Route 1 zu ermöglichen.

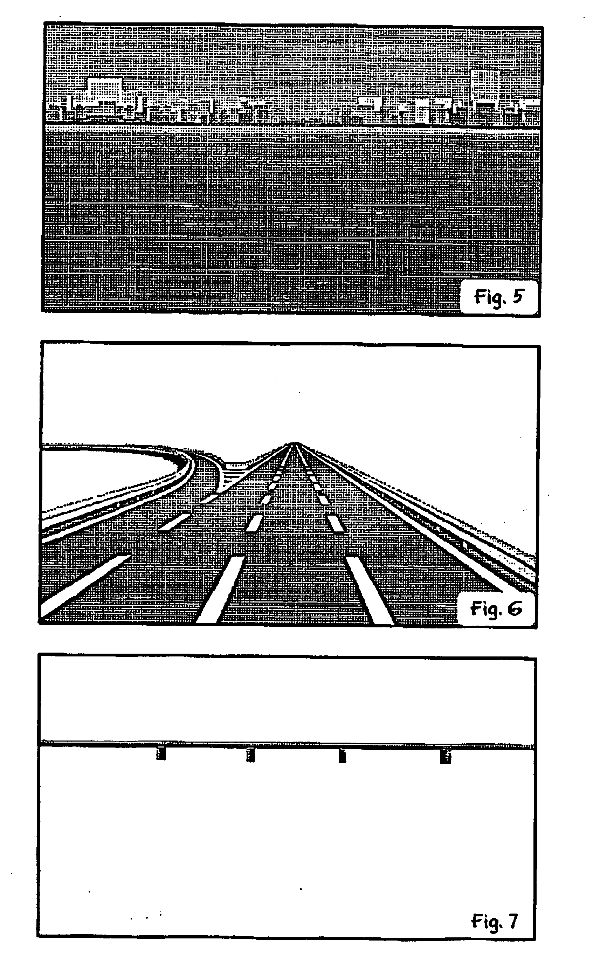

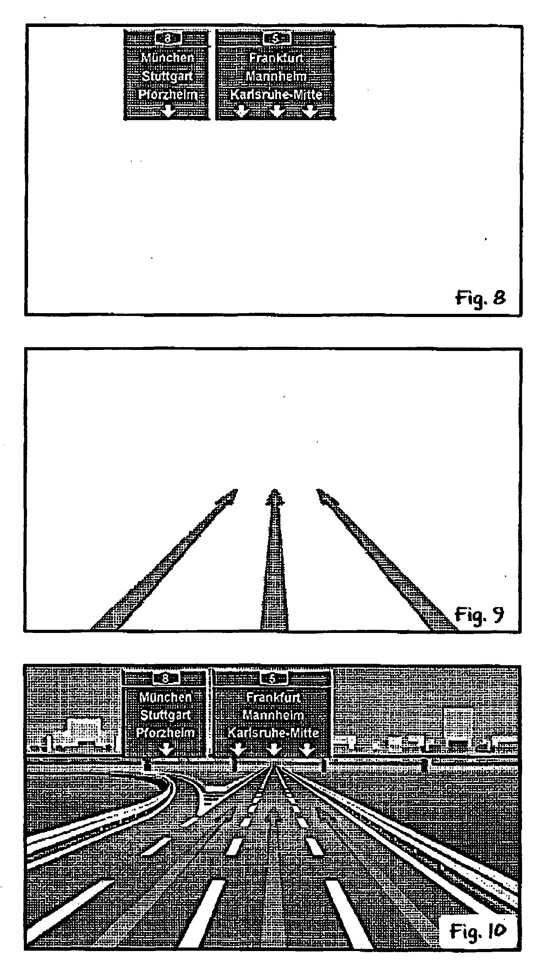

In den **Fig. 5** bis **10** ist dargestellt, wie gemäß einer Ausführungsform der vorliegenden Erfindung die Perspektivdarstellung modular aus separat erzeugten bzw. gespeicherten Grafikmodulen zusammengesetzt wird. Dabei zeigt **Fig. 5** den zu der Umgebung in der Nähe einer Stadt gehörigen städtischen Hintergrund bzw. Horizont, **Fig. 6** die zu der aktuellen komplexen Kreuzungssituation gehörige Straßengeometrie, **Fig. 7** eine im Fall der aktuellen Kreuzungssituation vorhandene Straßenbrücke, **Fig. 8** die ebenfalls zur aktuellen Kreuzungssituation gehörenden Autobahn-Schildertafeln, **Fig. 9** die im Rahmen der aktuellen Kreuzungssituation mit der aktuellen Navigationsroute spurgenau übereinstimmenden Routenführungspfeile und **Fig. 10** schließlich die durch Überlagerung der grafischen Einzelelemente gemäß **Fig. 5** bis **9** gebildete Perspektivdarstellung. Um eine einfache und nahtlose Überlagerung der Grafikmodule auch für den Fall nur geringer zur Verfügung stehender Grafikrechenleistung zu gewährleisten, sind die nicht bildschirmfüllenden Grafikmodule gemäß **Fig. 6** bis **9** freigestellt und mit einem transparenten Hintergrund versehen, beispielsweise im PNG-Grafikformat.

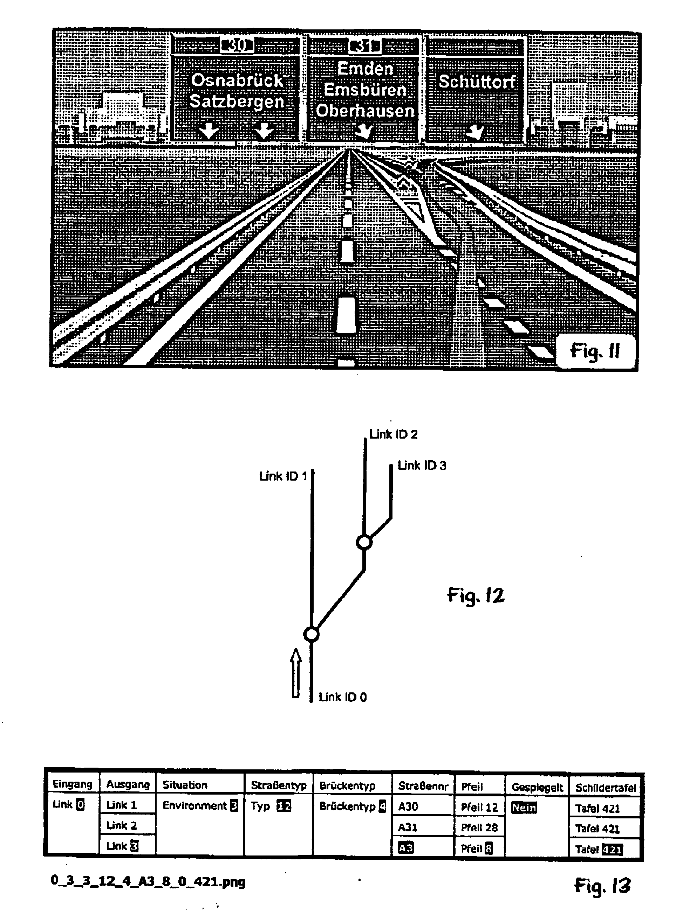

Eine Zusammenschau der **Fig. 11** bis **13** verdeutlicht den Zusammenhang zwischen den relevanten Charakteristika einer kompletten Kreuzung **(Fig. 11,** vgl. auch **Fig. 2****)** mit dem zugehörigen Verzweigungsbaum der Straßenkarte gemäß **Fig. 12** und der Zusammenstellung des Dateinamens gemäß **Fig. 13** zur Identifizierung der zugehörigen Perspektivdarstellung gemäß **Fig. 11.**

Man erkennt in der (mit **Fig. 2** übereinstimmenden) **Fig. 11,** dass unmittelbar hintereinander zwei Spurwechsel vorzunehmen sind, um von der Autobahn A31 auf die in der hier vorliegenden Navigationsroute enthaltene Ausfahrt "Schüttorf" zu gelangen. Auf der Straßenkarte gemäß **Fig. 12** entspricht dies dem Eintritt in die komplexe Kreuzung an der mit "Link ID 0" bezeichneten Stelle und dem Austritt aus der komplexen Kreuzung an der mit "Link ID 3" bezeichneten Stelle.

Um die zu diesem Fahrtverlauf durch die komplexe Kreuzung gehörige Perspektivdarstellung gemäß **Fig. 11** zu referenzieren, wird gemäß der Tabelle in **Fig. 13** ein eindeutiger Dateiname erzeugt. Der unterhalb der Tabelle in **Fig. 13** nochmals wiedergegebene Dateiname "0_3_3_12_4_A3_8_0_421.png" enthält dabei sämtliche zur Beschreibung der komplexen Kreuzung notwendigen Merkmale, insbesondere die in der Tabelle hervorgehobenen Auswahlwerte, die mit der hier vorliegenden Route durch die komplexe Kreuzung übereinstimmen.

Mit anderen Worten bedeutet dies, dass lediglich durch Aufruf des Dateinamens "0_3_3_12_4_A3_8_0_421.png" die komplette Routenführungsgrafik bzw. Perspektivdarstellung gemäß **Fig. 11** auf den Bildschirm gebracht werden kann. Insbesondere ist dies unabhängig davon, ob die Perspektivdarstellung gemäß **Fig. 11** bereits fertig vorgeneriert im Massenspeicher des Navigationsgeräts vorliegt oder aber ob die Perspektivdarstellung gemäß **Fig. 11** erst zur Laufzeit der Navigation gerendert oder aus einzelnen gespeicherten Grafikmodulen zusammengesetzt wird. In jedem Fall genügt alleine der Dateiname "0_3_3_12_4_A3_8_0_421. png", um die Grafik gemäß **Fig. 11** auf den Bildschirm des Navigationsgeräts zu bringen.

Im Ergebnis wird somit deutlich, dass dank der Erfindung eine Navigationseinrichtung sowie ein Verfahren zur grafischen Ausgabe von Navigationsanweisungen geschaffen werden, welche dem Nutzer eine einfache, rasche und besonders intuitive Übersicht über komplexe Kreuzungssituationen auf dem Bildschirm eines Navigationsgeräts ermöglichen.

Dank der Erfindung lässt sich ein hoher Grad an Übereinstimmung zwischen der sich dem Nutzer bietenden Sicht auf die reale Straßensituation und der Darstellung des entsprechenden Navigationsmanövers auf dem Bildschirm erzielen, und zwar weitgehend unabhängig davon, ob es sich bei einem Navigationsgerät um ein Gerät mit hoher Leistung oder um ein sehr einfaches Gerät handelt. Somit lässt sich die Grafikausgabe von Navigationsgeräten im Fall komplexer Kreuzungssituationen verbessern, wobei gleichzeitig ggf. Hardwarekosten eingespart werden können. Beim Einsatz im Kraftfahrzeug wird dank der verbesserten Führung des Fahrers durch komplizierte Manöver ein Sicherheitsgewinn erzielt.

Die Erfindung liefert im Gebiet der Navigationsgeräte damit auf der Nutzerseite einen grundlegenden Beitrag zur Verbesserung der Benutzerfreundlichkeit und Verkehrssicherheit, kann aber auch zur herstellerseitigen Verbesserung der Kosteneffektivität herangezogen werden.

## Patentansprüche

1. Navigationseinrichtung zur Ermittlung und Anzeige einer Navigationsroute von einer Fahrzeugposition zu einem Reiseziel, umfassend eine Prozessoreinrichtung mit Arbeitsspeicher, eine Massenspeichereinrichtung zur Aufnahme einer Datenbank mit geographischen Daten sowie eine Anzeigeeinrichtung,
**dadurch gekennzeichnet,**
**dass** in Abhängigkeit einer Bewertung der räumlichen Relativposition zumindest zweier aufeinander folgender Kreuzungspunkte der Navigationsroute und der tatsächlichen oder zu erwartenden Fahrzeuggeschwindigkeit, der Straßenklasseund/oder weiterer Charakteristika zur Klassifizierung von komplexen Kreuzungssituationen die aufeinander folgenden Kreuzungspunkte auf der Anzeigeeinrichtung in Form einer einzigen, gemeinsamen Perspektivdarstellung dargestellt sind, wobei die Perspektivdarstellung Schilder (4) als grafische Elemente umfasst, wobei sämtliche in der realen Straßensituation vorhandenen Schilder (4) dargestellt werden, und wobei dasjenige Schild (4), das auf die zu folgende Fahrspur bzw. Abzweigung hinweist, gegenüber den anderen vorhandenen, jedoch vorliegend weniger relevanten Schildern (4) hervorgehoben dargestellt wird; wobei die Navigationseinrichtung zur Bewertung und Ermittlung der räumlichen Relativposition der zumindest zwei Kreuzungspunkte und zur Erstellung der Perspektivdarstellung eingerichtet ist.

2. Navigationseinrichtung nach Anspruch 1,
**dadurch gekennzeichnet,**
**dass** die Perspektivdarstellung anhand zumindest einer fotografischen oder videografischen Aufnahme der realen Abbiegesituationen erstellt ist.

3. Navigationseinrichtung nach Anspruch 1 oder 2,
**dadurch gekennzeichnet,**
**dass** die Perspektivdarstellung anhand zumindest einer dreidimensional und/oder fotorealistisch gerenderten Aufnahme der realen Abbiegesituationen erstellt ist.

4. Navigationseinrichtung nach einem der Ansprüche 1 bis 3,
**dadurch gekenntzeichnet,**
dass die Perspektivdarstellung zumindest eine grafische Kurve bzw. zumindest einen durchgehenden Pfeil (1) zur Symbolisierung der vorgegebenen Route umfasst.

5. Navigationseinrichtung nach einem der Ansprüche 1 bis 4,
**dadurch gekennzeichnet,**
**dass** die Perspektivdarstellung statisch ist und mit einem beweglichen bzw. veränderlichen grafischen Element (7) überlagert ist, wobei das grafische Element den aktuellen Standort der Navigationseinrichtung symbolisiert.

6. Navigationseinrichtung nach einem der Ansprüche 1 bis 5,
**dadurch gekennzeichnet,**
**dass** die Perspektivdarstellung weitere grafische Elemente, insbesondere Brücken, Unterführungen, Points of Interest, Icons, Gebäudesilhouetten oder Landschaftsmerkmale, in Anlehnung an die reale Umgebung der Abbiegesituation umfasst.

7. Navigationseinrichtung nach Anspruch 6,
**dadurch gekennzeichnet,**
**dass** die weiteren grafischen Elemente unabhängig von der Perspektivdarstellung erzeugt und gespeichert sind.

8. Navigationseinrichtung nach Anspruch 6 oder 7,
**dadurch gekennzeichnet,**
**dass** die weiteren grafischen Elemente einen transparenten Bildhintergrund aufweisen.

9. Verfahren zur grafischen Ausgabe von Navigationsanweisungen durch eine zur Ermittlung und Anzeige einer Navigationsroute von einer Fahrzeugposition zu einem Reiseziel eingerichtete Navigationseinrichtung, die Navigationseinrichtung umfassend eine Prozessoreinrichtung mit Arbeitsspeicher, eine Massenspeichereinrichtung zur Aufnahme einer geographischen Datenbank, eine Anzeigeeinrichtung sowie eine in den Arbeitsspeicher bzw. in die Prozessoreinrichtung aufnehmbare Navigationssoftware, das Verfahren **gekennzeichnet durch** die nachfolgenden Verfahrensschritte:
a) **durch** die Navigationseinrichtung während der Navigationsfahrt Überprüfung auf Vorliegen einer komplexen Kreuzungssituation anhand einer Bewertung der räumlichen Relativposition zumindest zweier aufeinander folgender Kreuzungspunkte der Navigationsroute und der tatsächlichen oder zu erwartenden Fahrzeuggeschwindigkeit, der Straßenklasse und/oder weiterer Charakteristika zur Klassifizierung von komplexen Kreuzungssituationen;
b) bei positivem Ergebnis der Überprüfung aus Verfahrenschritt a) Erstellung einer grafischen Perspektivdarstellung der komplexen Kreuzungssituation, in Form einer einzigen gemeinsamen Perspektivdarstellung der aufeinanderfolgenden Kreuzungspunkte, anhand einer fotografischen, videografischen oder gerenderten Abbildung der komplexen Kreuzungssituation, wobei die Erzeugung der Perspektivdarstellung modular aus grafischen Einzelelementen erfolgt, wobei die grafischen Einzelelemente Schilder (4) umfassen;
c) Ausgabe der Perspektivdarstellung der komplexen Kreuzungssituation auf der Anzeigeeinrichtung, wobei sämtliche in der realen Straßensituation vorhandene Schilder (4) dargestellt werden, wobei dasjenige Schild (4), das auf die zu folgende Fahrspur bzw. Abzweigung hinweist, gegenüber den anderen vorhandenen, jedoch vorliegend weniger relevanten Schildern (4) hervorgehoben dargestellt wird.

10. Verfahren nach Anspruch 9,
**dadurch gekennzeichnet,**
**dass** im Rahmen der fotografischen, videografischen oder gerenderten Abbildungserzeugung im Verfahrenschritt b) relevante Charakteristika der realen Kreuzungssituation eingeschlossen werden, insbesondere Anzahl der Fahrspuren, Links/Rechts-Verkehr, Schilderbeschriftungen, geometrische Eigenschaften der Fahrspuren oder Überführungs- bzw. Unterführungssituationen.

11. Verfahren nach Anspruch 9 oder 10,
**dadurch gekennzeichnet,**
**dass** die Perspektivdarstellung zur Laufzeit des Grafik-Rendering erzeugt wird.

12. Verfahren nach einem der Ansprüche 9 bis 11,
**dadurch gekennzeichnet,**
**dass** die grafischen Einzelelemente Straßengeometrie, Brücken, Unterführungen, Points of Interest, Icons, Gebäudesilhouetten oder Landschaftsmerkmale umfassen.

13. Verfahren nach Anspruch 12,
**dadurch gekennzeichnet,**
**dass** die grafischen Einzelelemente einen transparenten Bildhintergrund aufweisen.

14. Verfahren nach Anspruch 12 oder 13,
**dadurch gekennzeichnet,**
**dass** die grafischen Einzelelemente mit austauschbaren Anzeigeformaten versehen sind.

15. Verfahren nach einem der Ansprüche 9 bis 14,
**dadurch gekennzeichnet,**
**dass** zumindest ein Schild (4) als grafisches Einzelelement während der Routenführung bzw. zur Laufzeit des Renderings der Perspektivdarstellung aus einer Textdatei erzeugt wird.

16. Verfahren nach einem der Ansprüche 9 bis 15,
**dadurch gekennzeichnet,**
**dass** die Perspektivdarstellung mit durchgehenden grafischen Kurven bzw. Pfeilen (1) in Übereinstimmung mit der gewählten Navigationsroute überlagert wird.

17. Verfahren nach Anspruch 16,
**dadurch gekennzeichnet,**
**dass** bei mehreren mit der Route übereinstimmenden Fahrspuren die Überlagerung der Perspektivdarstellung mit den grafischen Kurven bzw. Pfeilen (1) spurgenau erfolgt.

18. Verfahren nach einem der Ansprüche 9 bis 17,
**dadurch gekennzeichnet,**
**dass** die Perspektivdarstellung statisch ist und mit einem beweglichen bzw. veränderlichen grafischen Element (7) überlagert wird, wobei das grafische Element den aktuellen Standort der Navigationseinrichtung symbolisiert.

19. Verfahren nach einem der Ansprüche 9 bis 18,
**dadurch gekennzeichnet,**
**dass** die Charakteristika der komplexen Kreuzungssituation im Dateinamen der Perspektivdarstellung codiert sind.

## Claims

1. A navigation device for determining and displaying a navigation route from one vehicle position to a travel destination, comprising a processor with RAM, a mass storage device for holding a database with geographic data, as well as a display, **characterized in that**,
depending on an evaluation of the relative spatial position of at least two consecutive intersecting points in the navigation route and of the actual or expected vehicle speed, of the road class and/or of further characteristics for classifying complex intersections, the consecutive intersecting points are depicted on the display as a single, shared perspective view, wherein the perspective view encompasses signs (4) as graphic elements, wherein all signs (4) present in the actual road situation are displayed, and wherein the sign (4) pointing to the lane or turn to be followed is highlighted relative to the other present but currently less relevant signs (4), wherein the navigation device is programmed to evaluate and determine the relative spatial position of the at least two intersecting points and to generate the perspective view.

2. The navigation device according to claim 1,
**characterized in that**
the perspective view is generated based on at least one photograph or video recording of the actual turns.

3. The navigation device according to claim 1 or 2,
**characterized in that**
the perspective view is generated based on at least one three-dimensional and/or photorealistically rendered recording of the actual turns.

4. The navigation device according to one of claims 1 to 3,
**characterized in that**
the perspective view encompasses at least one graphic curve or at least one continuous arrow (1) to symbolize the prescribed route.

5. The navigation device according to one of claims 1 to 4,
**characterized in that**
the perspective view is static and superposed by a movable or variable graphic element (7), wherein the graphic element symbolizes the current location of the navigation device.

6. The navigation device according to one of claims 1 to 5,
**characterized in that**
the perspective view encompasses additional graphic elements, in particular bridges, underpasses, points of interest, icons, building silhouettes or topography features based on the actual environment of the turn.

7. The navigation device according to claim 6,
**characterized in that**
the additional graphic elements are generated and stored independently of the perspective view.

8. The navigation device according to claim 6 or 7,
**characterized in that**
the additional graphic elements exhibit a transparent image background.

9. A method for the graphic output of navigation instructions using a navigation device programmed for determining and displaying a navigation route from one vehicle position to a travel destination, wherein the navigation device comprises a processor with RAM, a mass storage device for holding a geographic database, a display, and also navigation software that can be loaded in the RAM or processor, and the method is **characterized by** the following procedural steps:
a) the navigation device performing a check during the navigation process to see whether a complex intersection is present by means of an evaluation of the relative spatial position of at least two consecutive intersecting points in the navigation route and of the actual or expected vehicle speed, of the road class and/or of further characteristics for classifying complex intersections;
b) given a positive result of the check performed in procedural step a), generating a graphic perspective view of the complex intersection, in the form of a single, shared perspective view of the consecutive intersecting points by means of a photographic, videographic or rendered image of the complex intersection, wherein the perspective view is generated modularly by assembling individual graphic elements, wherein the individual graphic elements encompass signs (4);
c) outputting the perspective view of the complex intersection on the display, wherein all signs (4) present in the actual road situation can be displayed, wherein the sign (4) pointing to the lane or turn to be followed is highlighted relative to the other present but currently less relevant signs (4).

10. The method according to claim 9,
**characterized in that**
relevant characteristics of the actual intersection are included as part of the photographic, videographic or rendered image generation in procedural step b), in particular the number of lanes, right/left traffic, sign inscriptions, geometric properties of the driving lanes or overpasses/underpasses.

11. The method according to claim 9 or 10,
**characterized in that**
the perspective view is generated with graphic rendering in process.

12. The method according to one of claims 9 to 11,
**characterized in that**
the individual graphic elements encompass road geometry, bridges, underpasses, points of interest, icons, building silhouettes or topographical features.

13. The method according to claim 12,
**characterized in that**
the individual graphic elements exhibit a transparent image background.

14. The method according to claim 12 or 13,
**characterized in that**
the individual graphic elements are provided with exchangeable display formats.

15. The method according to one of claims 9 to 14,
**characterized in that**,
at least one sign (4) is generated from a text file as an individual graphic element during route guidance or while rendering the perspective view.

16. The method according to one of claims 9 to 15,
**characterized in that**
the perspective view is superposed with continuous graphic curves or arrows (1) in accordance with the selected navigation route.

17. The method according to claim 16,
**characterized in that**
the graphic curves or arrows (1) are superposed onto the perspective view precisely to the lanes given several lanes that match the route.

18. The method according to one of claims 9 to 17,
**characterized in that**
the perspective view is static and superposed with a movable or variable graphic element (7), wherein the graphic element symbolizes the current location of the navigation device.

19. The method according to one of claims 9 to 18,
**characterized in that**
the characteristics of the complex intersection are encoded in the file name of the perspective view.

## Revendications

1. Dispositif de navigation pour déterminer et afficher un itinéraire de navigation à partir d'une position de véhicule jusqu'à une destination, comprenant un processeur avec une mémoire RAM, un périphérique de stockage de masse pour stocker une base de données contenant des données géographiques, ainsi qu'un périphérique d'affichage,
**caractérisé en ce qu'**
en fonction d'une évaluation de la position spatiale relative d'au moins deux points d'intersection consécutifs sur l'itinéraire de navigation et de la vitesse réelle ou prévue du véhicule, de la classe routière et/ou d'autres caractéristiques pour classer des intersections complexes, les points d'intersection complexes consécutifs sont affichés sur le périphérique d'affichage en tant qu'une seule vue en perspective commune, la vue en perspective comprenant des signes (4) en tant qu' éléments graphiques, dans lequel tous les signes (4) présents dans la situation routière réelle sont affichés, et dans lequel le signe (4) indiquant la voie ou la bifurcation à suivre est mis en relief vis-à-vis les autres signes (4) étant présents mais actuellement moins pertinents, le dispositif de navigation étant programmé pour évaluer et déterminer la position spatiale relative des au moins deux points d'intersection et pour générer la vue en perspective.

2. Dispositif de navigation selon la revendication 1,
**caractérisé en ce que**
la vue en perspective est générée sur la base d'au moins une représentation photographique ou vidéographique des situations réelles des manoeuvres tournantes.

3. Dispositif de navigation selon la revendication 1 ou 2,
**caractérisé en ce que**
la vue en perspective est générée sur la base d'au moins une représentation tridimensionnelle et/ou rendue de manière photoréaliste des situations réelles des manoeuvres tournantes.

4. Dispositif de navigation selon l'une quelconque des revendications 1 à 3,
**caractérisé en ce que**
la vue en perspective comprend au moins une courbe graphique ou au moins une flèche (1) continue pour symboliser l'itinéraire prescrit.

5. Dispositif de navigation selon l'une quelconque des revendications 1 à 4,
**caractérisé en ce que**
la vue en perspective est statique et superposée par un élément graphique (7) mobile ou variable, l'élément graphique symbolisant la position actuelle du dispositif de navigation.

6. Dispositif de navigation selon l'une quelconque des revendications 1 à 5,
**caractérisé en ce que**
la vue en perspective comprend des éléments graphiques additionnels, en particulier des ponts, des passages inférieurs, des points d'intérêt, des icônes, des silhouettes de bâtiments ou des caractéristiques topographiques sur la base des alentours réels de la situation de la manoeuvre tournante.

7. Dispositif de navigation selon la revendication 6,
**caractérisé en ce que**
les éléments graphiques additionnels sont générés et stockés indépendamment de la vue en perspective.

8. Dispositif de navigation selon la revendication 6 ou 7,
**caractérisé en ce que**
les éléments graphiques additionnels présentent un fond d'image transparent.

9. Procédé pour la sortie graphique d'instructions de navigation en utilisant un dispositif de navigation programmé pour déterminer et afficher un itinéraire de navigation à partir d'une position de véhicule jusqu'à une destination, le dispositif de navigation comprenant un processeur avec une mémoire RAM, un périphérique de stockage de masse pour stocker une base de données géographiques, un périphérique d'affichage, et aussi un logiciel de navigation pouvant être chargé dans la mémoire RAM ou dans le processeur, le procédé étant **caractérisé par** les étapes de processus suivantes:
a) le dispositif de navigation effectuant une vérification pendant la procédure de navigation pour déterminer si une intersection complexe est présente au moyen d'une évaluation de la position spatiale relative d'au moins deux points d'intersection consécutifs sur l'itinéraire de navigation et de la vitesse réelle ou prévue du véhicule, de la classe routière et/ou d'autres caractéristiques pour classer des intersections complexes;
b) une vue en perspective graphique de l'intersection complexe étant générée sous la forme d'une seule vue en perspective commune des points d'intersection consécutifs au moyen d'une image photographique, vidéographique ou rendue de l'intersection complexe si un résultat positif de la vérification effectuée à l'étape de processus a) est obtenu, la vue en perspective étant générée de manière modulaire en assemblant des éléments graphiques individuels, les éléments graphiques individuels comprenant des signes (4);
c) la vue en perspective de l'intersection complexe étant affichée sur le périphérique d'affichage, tous les signes (4) présents dans la situation routière réelle étant affichés, le signe (4) indiquant la voie ou la bifurcation à suivre étant mis en relief vis-à-vis les autres signes (4) étant présents mais actuellement moins pertinents.

10. Procédé selon la revendication 9,
**caractérisé en ce que**
les caractéristiques pertinentes de l'intersection réelle sont inclus lors de la génération de l'image photographique, vidéographique ou rendue à l'étape de processus b), en particulier le nombre des voies, la circulation à gauche/à droite, les inscriptions des signes, les caractéristiques géométriques des voies de circulation ou les passages supérieurs/inférieurs.

11. Procédé selon la revendication 9 ou 10,
**caractérisé en ce que**
la vue en perspective est générée pendant le processus de rendement graphique.

12. Procédé selon la revendication 9 à 11,
**caractérisé en ce que**
les éléments graphiques individuels comprennent la géométrie routière, des ponts, des passages inférieurs, des points d'intérêt, des icônes, des silhouettes de bâtiments ou des caractéristiques topographiques.

13. Procédé selon la revendication 12,
**caractérisé en ce que**
les éléments graphiques individuels présentent un fond d'image transparent.

14. Procédé selon la revendication 12 ou 13,
**caractérisé en ce que**
les éléments graphiques individuels sont munis de formats d'affichage échangeables.

15. Procédé selon l'une quelconque des revendications 9 à 14,
**caractérisé en ce qu'**
au moins un signe (4) est généré à partir d'un fichier de texte en tant qu' élément graphique individuel pendant le guidage routier ou pendant le rendement de la vue en perspective.

16. Procédé selon l'une quelconque des revendications 9 à 15,
**caractérisé en ce que**
la vue en perspective est superposée par des courbes graphiques ou flèches (1) continues conformément à l'itinéraire de navigation choisi.

17. Procédé selon la revendication 16,
**caractérisé en ce que**
les courbes ou flèches (1) graphiques sont superposées sur la vue en perspective précisément sur les voies si plusieurs voies correspondant à l'itinéraire sont présentes.

18. Procédé selon l'une quelconque des revendications 9 à 17,
**caractérisé en ce que**
la vue en perspective est statique et superposée par un élément graphique (7) mobile ou variable, l'élément graphique symbolisant la position actuelle du dispositif de navigation.

19. Procédé selon l'une quelconque des revendications 9 à 18,
**caractérisé en ce que**
les caractéristiques des intersections complexes sont encodées dans le nom du fichier de la vue en perspective.
